# EUROPEAN PATENT APPLICATION

(11) **EP 1 365 201 A1**
(43) Date of publication of application: **26.11.2003**
(21) Application number: 03010450.9
(22) Date of filing: 09.05.2003
(51) Int. Cl.: F27B 14/06, F27B 14/04, C21C 7/10, H05B 6/24, F27B 14/10

(54) **Melting crucible and method**

(30) Priority: 14.05.2002 US 146461
(71) Applicant: Howmet Research Corporation, Whitehall, Michigan 49461 (US)
(72) Inventor: Todaro, Thomas J., Wharton, New Jersey 07885 (US); Tarby, Mark K., Edison, New Jersey 08820 (US); Andruchowitz, Jason S., Old Bridge, New Jersey 08857 (US); Astrab, John M., Belvidere, New Jersey 07823 (US); Bayles, Robert H., Hackettstown, New Jersey 07840 (US); Bornemann, Edward, Rockaway, New Jersey 07866 (US); Maslen, James D., Landing, New Jersey 07850 (US); Miller, Evan R., Sparta, New Jersey 07871 (US); Normann, George J., East Stroudsburg, Pennsylvania 18301 (US); Osagie-Erese, Albert, East Orange, New Jersey 07017 (US)
(74) Representative: Hoeger, Stellrecht & Partner

(57) **Abstract**

A melting method and a melting crucible assembly involve positioning a disposable (non-reusable), self-supporting refractory liner body in a refractory host crucible and melting a metallic charge in the liner residing in the host crucible. The melted metallic charge is poured from the refractory liner body, and the used refractory liner body is removed from the host crucible for discarding and replaced with a clean, new (unused) refractory liner body in the host crucible for melting the next metallic charge therein.

## Description

### FIELD OF THE INVENTION

The present invention relates to melting of a metal or alloy in a crucible and to a crucible assembly for such melting.

### BACKGROUND OF THE INVENTION

Induction melting crucibles are known in the metal casting art for melting a charge of metal or alloy. An induction melting crucible typically includes a ceramic crucible around which an induction coil is disposed to heat and melt a solid metal or alloy charge. A refractory material is packed on the inside of the induction coil to form a recess for receiving the crucible. The crucible may be mounted on trunnions and tilted about the trunnion axis to pour a molten metal charge over a lip of the crucible into an underlying mold or other molten metal receiving vessel. Alternatively, the crucible may include a discharge opening in the bottom wall thereof and a stopper rod, plug or other closure mechanism to prevent release of the molten metal from the crucible through the discharge opening to an underlying mold or other molten metal receiving vessel until the molten metal or alloy is at a proper casting temperature.

In the vacuum induction melting of oxygen-reactive nickel base superalloys and cobalt base superalloys used to investment cast gas turbine engine components, such as turbine blades, vanes and other components, the melt of superalloy contained in the crucible can include dross and other contaminants floating on the melt surface. Dross typically comprises metal oxides that migrate to and float on the melt surface. Other contaminants on or in the melted charge can include non-metallic inclusions, such as metal nitrides, sulfides and the like and unreacted crucible particulate material. It is desirable to reduce the amount of dross and other contaminants floating on the melt surface that are poured from the crucible into the investment mold where they ultimately may adversely affect the quality of the superalloy casting produced in the investment mold.

### SUMMARY OF THE INVENTION

The present invention provides in one embodiment a method of melting and pouring successive metallic charges, such as for example oxygen-reactive nickel base superalloys or cobalt base superalloys, comprising positioning a metallic charge in a disposable, self-supporting refractory vessel, melting the metallic charge in the vessel under vacuum or a protective atmosphere such as for example an inert gas, nitrogen, etc., pouring the melted metallic charge from the vessel, discarding the vessel, and melting the next metallic charge in a clean, new refractory vessel.

The present invention provides in another embodiment a melting method and a melting crucible assembly that involve positioning a disposable (non-reusable), self-supporting refractory liner body in a refractory host crucible and melting a metallic charge such as, for example, a solid nickel or cobalt base superalloy charge in the liner residing in the host crucible. The melted metallic charge is poured from the refractory liner body into a mold, and the used (spent) refractory liner body is removed from the host crucible for discarding and replaced with a clean, new (unused) refractory liner body in the host crucible for melting the next metallic charge therein.

In a particular embodiment of the invention, the disposable refractory liner body comprises a tubular body having a closed bottom wall to form an internal chamber. A partition wall is present in the internal chamber of the liner body to provide a melting chamber section and a pouring chamber section communicated to one another at a location disposed below an existing level of melted metallic charge (melt level) in the liner body. A pour opening is disposed in a cover that partially overlies the pouring chamber section and is connected to the uppermost end of the partition wall. The partition wall is configured such that clean melted metallic charge below the existing melt level flows to the pouring chamber section when the crucible assembly is tilted, while dross and other contaminants floating on the melt surface in the melting chamber section remain confined in that chamber section. Use of a clean, new refractory liner body for melting each respective metallic charge and the flow of the melted metallic charge from the melting chamber section to the pouring chamber section reduces the amount of dross and other contaminants that will be poured from the pouring chamber section into a mold.

The above and other objects and advantages of the present invention will become more readily apparent from the following drawings taken in conjunction with the following detailed description.

### DESCRIPTION OF THE DRAWINGS

Figure 1 is a sectional view of a melting crucible assembly, with the liner body shown in elevation, taken along lines 1-1 of Fig. 2 in accordance with an illustrative embodiment of the invention.
Figure 2 is a plan view of a melting crucible assembly in accordance with an illustrative embodiment of the invention. The support tray for the melting crucible assembly is omitted for convenience.
Figure 3 is a plan view of the refractory liner body.
Figure 4 is a sectional view taken along lines 4-4 of Fig. 3 of the refractory liner body.
Figure 5 is an isometric view of the refractory liner body.
Figure 6 is a sectional view of the crucible assembly with a solid ingot shown in elevation received in a recess on the partition wall of the refractory liner body tilted to a near horizontal position.
Figure 7 is a view showing melted metallic material being poured from the liner body into a mold.
Figure 8 is a longitudinal sectional view of a melting vessel in accordance with another illustrative embodiment of the invention.

### DESCRIPTION OF THE INVENTION

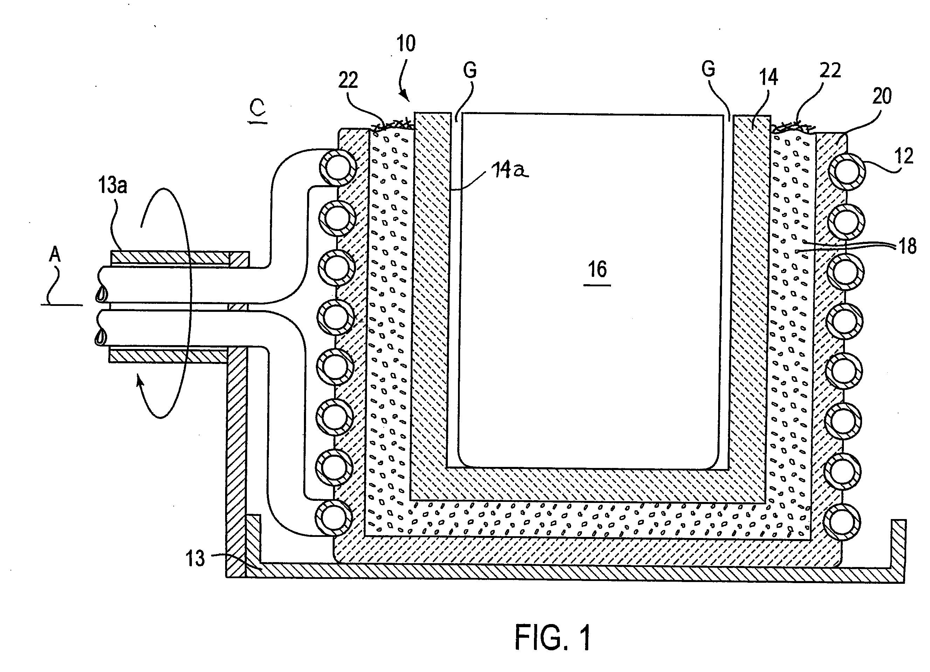

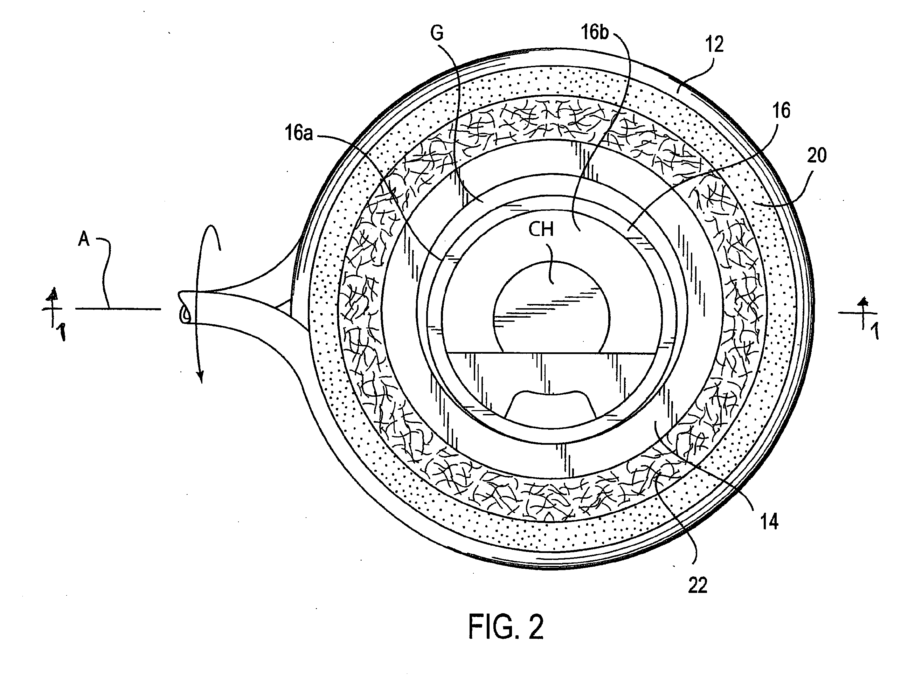

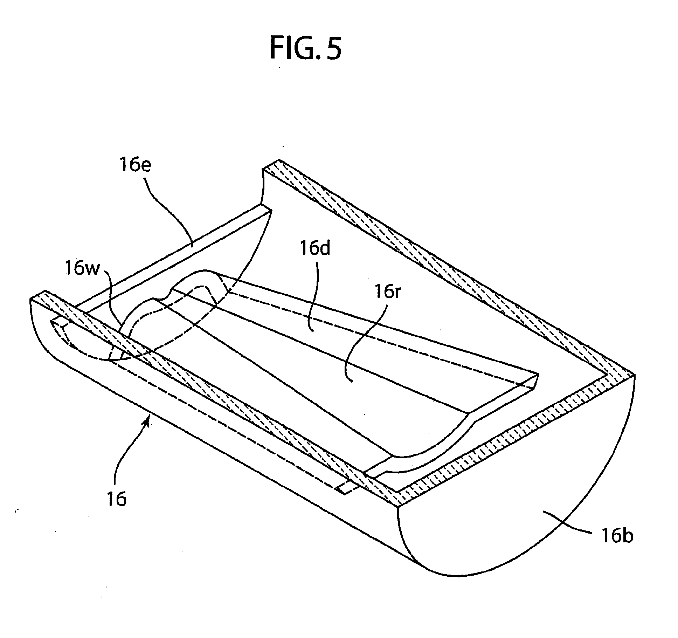

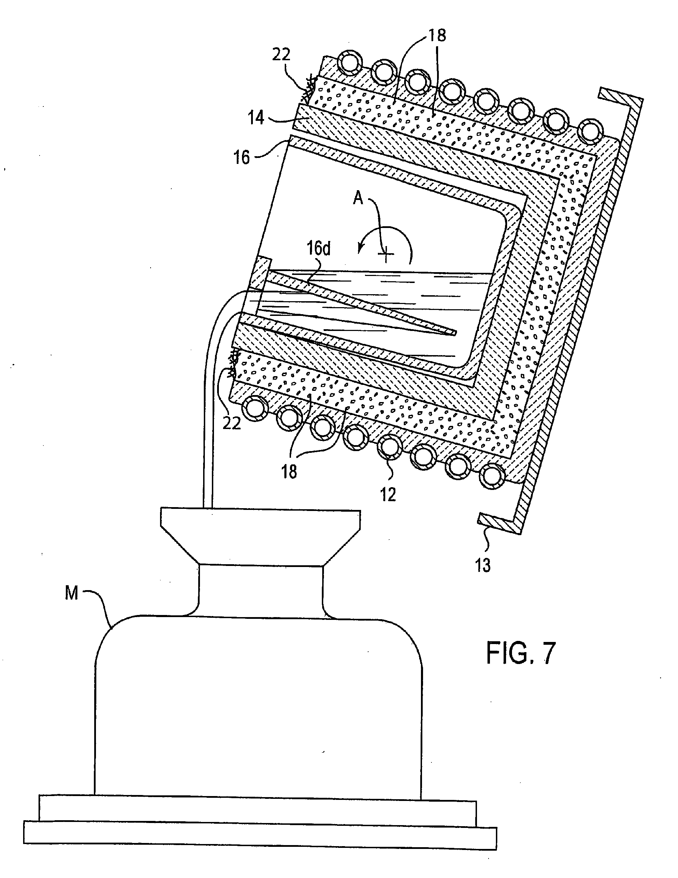

Figures 1-7 illustrate schematically a melting crucible assembly 10 for melting a solid metallic charge, such as a metal or alloy. The solid metallic charge can be in the form an ingot, billet, sponge, particulates, and other available material forms. For purposes of illustration and not limitation, the melting crucible assembly 10 is especially useful and beneficial to heat and melt a solid metallic charge (e.g. an ingot or billet) comprising an oxygen-reactive nickel base superalloy or cobalt base superalloy in chamber C. Nickel base superalloys and cobalt base superalloys are well known and widely used in making investment cast gas turbine engine components having an equiaxed grain microstructure or a directionally solidified microstructure that includes a columnar grain microstructure or single crystal. Such superalloys are described herein as oxygen-reactive in the sense that the superalloys usually include alloying elements that are prone to react with or have a high affinity for oxygen at melting temperatures employed. For purposes of illustration and not limitation, nickel base and cobalt base superalloys include, but are not limited to, CMSX-3, CMSX-4, INCONEL 625, STELLITE 25, and STELLITE 31 superalloys and others (see for example US Patents 4 582 548 and 4 643 782). The chamber C can have a vacuum (subambient pressure) of about 100 microns and below, such as about 1 to about 10 microns, therein or a substantially oxygen-free protective atmosphere, such as inert gas, nitrogen, and the like that is non-reactive with the melted superalloy. The protective atmosphere may be present in chamber C at a partial pressure less than atmospheric pressure, at or near atmospheric pressure, or at a positive pressure greater than atmospheric pressure for melting a superalloy charge.

The melting crucible assembly 10 is shown including an induction coil 12 disposed about a refractory host crucible 14 and a refractory liner body 16 disposed in the host crucible and functioning a melting vessel in which a solid charge CH of a metallic material is heated and melted. The induction coil 12 is supported on a metal or other support tray 13, which is rotatable about axis A of a shaft 13a connected to the support tray to position the crucible assembly in a near horizontal position to receive a solid metallic charge (e.g. a solid ingot or billet) CH to be melted and to an upstanding position where the solid metallic charge is melted in the refractory liner body (melting vessel) 16 by energizing the induction coil 12. In lieu of using induction coil 12 to heat and melt the metallic charge in the refractory liner body, electrical resistance heating/melting, gas fired heating/melting, electron beam heating/melting, or any other means for heating and melting the metallic charge in the refractory liner body 16 can be cooperatively positioned in chamber C relative to the metallic charge in practice of the invention.

The host crucible 12 resides in a bed of packed refractory grog particulates 18. The grog particulates 18 in turn are received in refractory shell 20 applied to the interior of the induction coil 12. The refractory shell 20 can be formed by manually applying a refractory mud or grout to the interior of the induction coil 12 and hardening the refractory mud by curing a resin binder or other type of binder therein in conventional manner. The refractory shell 20 is first formed on the interior of the induction coil 12. Then, the bottom of grog particulates 18 is placed on the bottom of shell 20 followed by positioning of the host crucible 14 on the grog particulates 18. Additional grog particulates then are introduced and packed into the annular space between the upstanding wall of the host crucible 14 and the upstanding wall of the refractory shell 20 with the grog particulates topped off with a layer 22 of thermal insulation, such as KAOWOOL insulation.

The disposable refractory liner body (melting vessel) 16 is received in the host crucible 14 in a manner that the liner body 16 can be readily placed in the host crucible and subsequently removed from the host crucible after a metallic charge has been melted and poured from the crucible assembly. The refractory liner body 16 thus comprises a disposable (non-reusable or throw-away) liner body that is used only one time to melt a metallic charge, then removed, and replaced with a clean, new refractory liner body 16 in the host crucible. The used (spent) refractory liner body 16 will contain a small amount of the unpoured, melted metallic charge with dross and other contaminants such that the used (spent) liner body is discarded and not reused.

The refractory liner body (melting vessel) 16 can comprise any suitable refractory material selected in dependence on the metal or alloy to be melted therein. For example, for purposes of illustration and not limitation, in melting a conventional nickel base superalloy, the refractory body liner 16 can comprise alumina silicate ceramic. The host crucible 14 can comprise zircon or alumina silicate ceramic, while the grog particulates can comprise zirconia particles of -10+35 mesh size meaning the grog particles are less than 10 mesh and greater than 35 mesh size using U.S. Standard Sieve system. The refractory shell 20 can comprise castable alumina. The invention is not limited to any particular refractory materials which, as mentioned, are selected in dependence on the metal or alloy to be melted in the liner body 16.

The disposable (non-reusable), refractory liner body (melting vessel) 16 is self-supporting in that it supports its own weight as well as the weight the metallic charge melted therein at the particular melting temperature employed without the need for any mechanical support from the host crucible 14, which serves only to receive and position the liner body 16.

For purposes of illustration and not limitation, the refractory liner body 16 is shown having a cylindrical tubular shape with a closed end, although any suitable body shape can be used. The liner body 16 is received with radial clearance G in the host crucible 14 such that the liner body 16 can be readily placed in the host crucible and subsequently removed from the host crucible after a metallic charge has been melted and poured from the crucible assembly. To this end, the outer diameter of the liner body 16 is less than the inner diameter of the cylindrical side wall 14a of the host crucible 14. The liner body 16 is not connected to the host crucible 14 other than being received therein.

The refractory liner body 16 includes annular, cylindrical side wall 16a and an integral bottom wall 16b that closes off the end the liner body to form an internal chamber 16c in the liner body 16. The liner body includes an integral partition wall 16d that extends downwardly in the internal chamber 16c to define or provide a melting chamber section MS and a pouring chamber section PS communicated to one another at a location disposed below the existing level of melted metallic charge (melt level) in the liner body. The liner body 16 includes integral walls 16w that intersect with partition wall 16d to form pouring chamber section PS. For purposes of illustration and not limitation, the partition wall 16d is shown terminating at its lowermost end a distance above the bottom wall 16b such that a through-passage 16p is formed between the melting chamber section MS and a pouring chamber section PS for flow of clean melted metallic material from the melting chamber section MS to the pouring chamber section PS. Alternatively, the partition wall may include openings (not shown) extending therethrough to this same end.

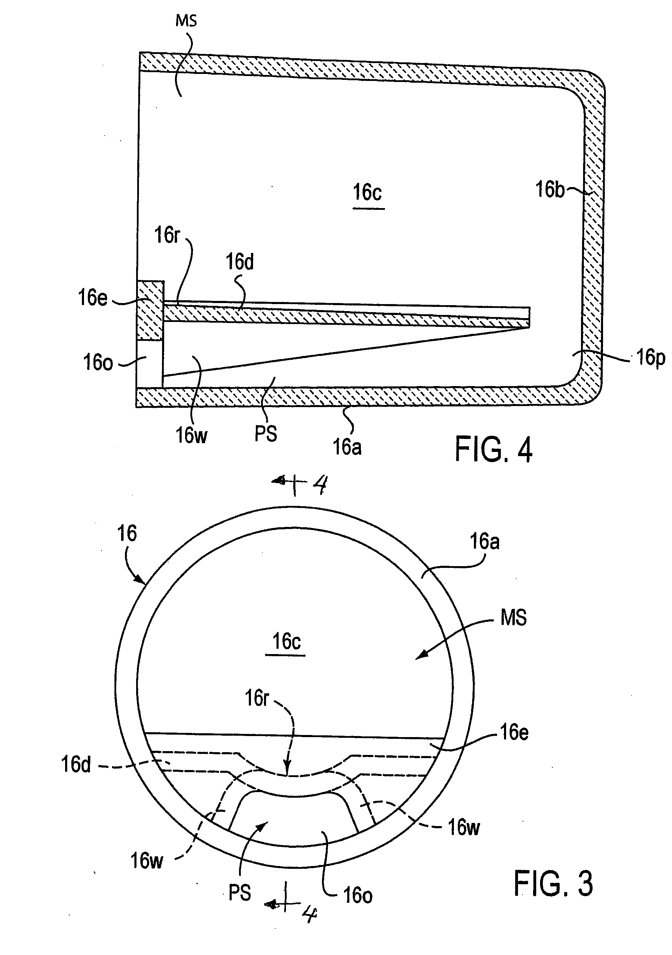

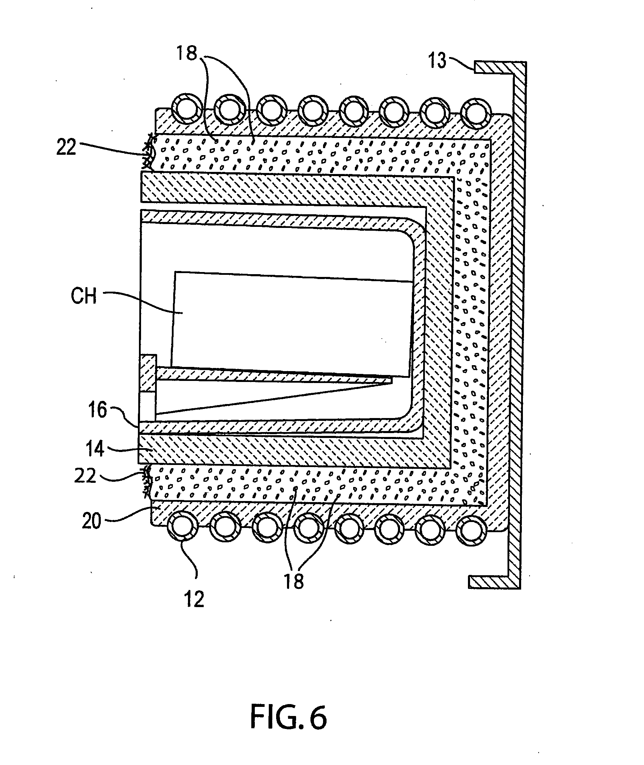

The partition wall 16d is configured to form a scallop or recess 16r along the side thereof facing the melting chamber section MS. The recess 16r widens in the direction toward the lowermost end of the partition wall as best shown in Figure 4. This recess 16r is adapted to receive and position a cylindrical ingot or billet of solid metallic charge to be melted. In particular, the melting crucible assembly 10 can be tilted to place the liner body 16 in a near horizontal position. The cylindrical ingot or billet then can be placed in the recess 16r on partition wall 16d, Figure 6. The melting crucible assembly 10 then can be tilted to place the liner body 16 in an upstanding vertical position for melting of the ingot or billet.

The refractory liner 16 includes a cover 16e that overlies the partition wall 16d and is connected to the uppermost end of the partition wall 16d by ceramic cement for example. The cover 16e includes a discharge or pouring opening 16o through which melted metallic material in the pouring chamber section PS is poured when the crucible assembly 10 is tilted to this end by rotation of support tray 13 by any suitable rotary actuator (not shown) connected to shaft 13a, Figure 1.

The partition wall 16d is positioned and configured such that clean melted metallic charge below the existing melt level in melting chamber section MS flows to the pouring chamber section PS when the melting crucible assembly 10 is tilted, while dross and other contaminants floating on the melt surface in the melting chamber section MP remain confined in that chamber section. Use of a vacuum or protective atmosphere in chamber C together with a clean, new refractory liner body 16 for melting each respective metallic charge as well as the flow of the melted metallic charge from the melting chamber section MS to the pouring chamber section PS under the partition wall 16d reduces the amount of dross and other contaminants that will be poured from the pouring chamber section into a mold M, such as an investment mold, that will be positioned beneath the melting crucible assembly 10 in chamber C to receive the melted metallic charge as described, for example, in US Patent 5 226 946, which is incorporated herein by reference.

The cylindrical liner body comprising sidewall 16a and bottom wall 16b can be made using conventional ceramic fabrication techniques that include pressed powder and sintering. The walls 16d, 16w and cover 16e are similarly made and connected to the cylindrical body by cementing.

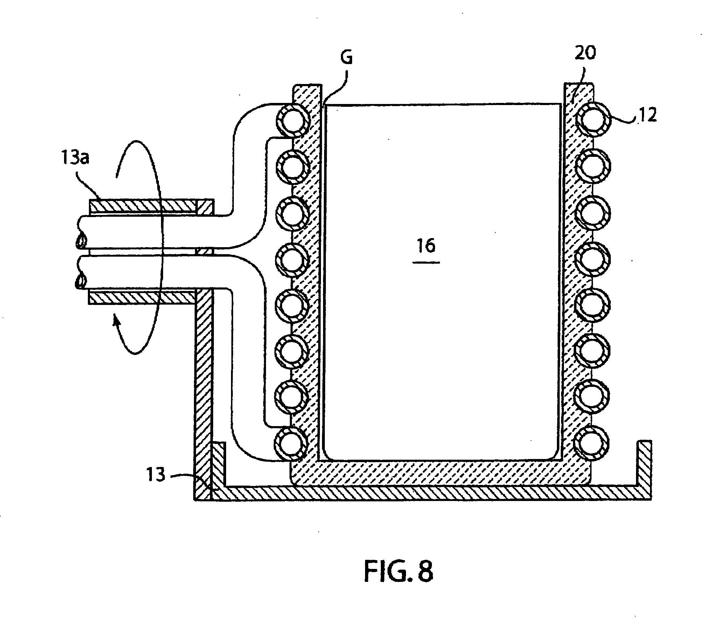

Although the invention has been described in detail above with respect to the refractory liner body 16 being disposed in host crucible 14 that resides in refractory particulates 18 and refractory shell 20, the invention is not so limited. The refractory liner body 16 can be used alone as a melting vessel and surrounded by induction coil 12 or otherwise cooperatively positioned relative to any other heating means such as electrical resistance heating elements, gas fired heating elements, electron beam(s) and the like, that can heat and melt the metallic charge CH residing therein as illustrated in Figure 8. The refractory liner body 16 used as a melting vessel is tilted by rotating tray 13 to pour melted metallic charge therefrom such as, for example, into a mold. Moreover, although the invention is described above with respect to certain embodiments, those skilled in the art will appreciate that modifications and changes can be made therein without departing from the spirit and scope of the invention set forth in the appended claims.

## Claims

1. A method of melting and pouring successive metallic charges, comprising positioning a metallic charge in a disposable, self-supporting refractory vessel, melting the metallic charge in said vessel under vacuum or a protective atmosphere, pouring the melted metallic charge from said vessel, discarding said vessel, and melting a next metallic charge in a clean, new refractory vessel under a vacuum or protective atmosphere.

2. The method of claim 1 wherein the metallic charge comprising a nickel base superalloy or a cobalt base superalloy is melted in a melting chamber section in said liner body.

3. The method of claim 2 wherein the melted metallic charge is poured from a pouring chamber section communicated to said melting chamber section in said liner body at a location below a melt level of the melted metallic charge in said liner body.

4. The method of one of the preceding claims wherein said metallic charge is melted by energizing an induction coil disposed about said vessel.

5. The method of one of the preceding claims wherein the melted metallic charge is melted under a protective atmosphere selected from inert gas or nitrogen.

6. A method of melting and pouring a metallic charge, comprising positioning a metallic charge in a disposable refractory liner body residing in a refractory host crucible, melting the metallic charge in said liner body, pouring the melted metallic charge from said liner body, removing said liner body from said host crucible, and placing a clean, new refractory liner body to melt the next metallic charge.

7. The method of claim 6 wherein the metallic charge comprising a nickel base superalloy or cobalt base superalloy is melted in a melting chamber section in said liner body.

8. The method of claim 7 wherein the melted metallic charge is poured from a pouring chamber section communicated to said melting chamber section in said liner body at a location below a level of the melted metallic charge in said liner body.

9. The method of one of claims 6 to 8 wherein said metallic charge is melted by energizing an induction coil disposed about the host crucible.

10. The method of one of claims 6 to 9 wherein the melted metallic charge is poured into a mold.

11. A melting crucible assembly comprising a refractory host crucible, and a disposable, self-supporting refractory liner body disposed in the host crucible and in which a metallic charge is melted, said liner body including a partition wall that forms a melting chamber section and a pouring chamber section communicated to one another at a location disposed below a melt level of a melted metallic charge in said liner body such that melted metallic charge below said level flows from the melting chamber section to the pouring chamber section when said crucible assembly is tilted.

12. The assembly of claim 11 including an induction coil about the host crucible.

13. The assembly of claim 11 or 12 wherein said host crucible resides in a bed of refractory grog particulates.

14. The assembly of one of claims 11 to 13 wherein said liner body is received in said host crucible with clearance that allows said liner body to be removed from said host crucible after said metallic charge has been melted and poured.

15. The assembly of one of claims 11 to 14 wherein said liner body has a cylindrical tubular shape.

16. The assembly of claim 15 wherein said liner body has an outer diameter that is less than an inner diameter of a cylindrical side wall of said host crucible.

17. The assembly of one of claims 11 to 16 wherein said partition wall extends downwardly in said liner body when it is oriented in an upstanding position.

18. The assembly of claim 17 wherein said partition wall terminates at its lowermost end a distance above a bottom wall of said liner body such that a passage is formed between said melting chamber section and said pouring chamber section for flow of clean melted metallic material from said melting chamber section to said pouring chamber section.

19. The assembly of one of claims 11 to 18 wherein said partition wall is configured to form a recess along a side thereof facing said melting chamber section.

20. The assembly of claim 19 wherein said recess is adapted to receive and position a cylindrical ingot or billet of said metallic charge material.

21. The assembly of one of claims 11 to 20 wherein said liner body includes a cover that is connected to the uppermost end of said partition wall, said cover including an opening through which melted metallic charge in said pouring chamber section is poured when said crucible assembly is tilted.

22. The combination of a melting vessel in a chamber having a vacuum or a protective atmosphere therein, comprising a disposable, self-supporting refractory vessel in which a metallic charge comprising a nickel base superalloy or cobalt base superalloy is melted, said vessel including a partition wall that forms a melting chamber section and a pouring chamber section communicated to one another at a location disposed below a melt level of melted metallic charge in said vessel such that melted metallic charge below said level flows from the melting chamber section to the pouring chamber section when said vessel is tilted.

23. The combination of claim 22 wherein said vessel is received in said host crucible with clearance that allows said vessel to be removed from said host crucible after said metallic charge has been melted and poured.

24. The combination of claim 22 or 23 wherein said partition wall extends downwardly in said liner body when it is oriented in an upstanding position.

25. The combination of claim 24 wherein said partition wall terminates at its lowermost end a distance above a bottom wall of said liner body such that a passage is formed between said melting chamber section and said pouring chamber section for flow of clean melted metallic material from said melting chamber section to said pouring chamber section.

26. The combination of one of claims 22 to 25 wherein said partition wall is configured to form a recess along a side thereof facing said melting chamber section, said recess being adapted to receive and position a cylindrical ingot or billet of said metallic charge material.

27. The combination of one of claims 22 to 26 wherein said vessel includes a cover that is connected to the uppermost end of said partition wall, said cover including an opening through which melted metallic charge in said pouring chamber section is poured when said crucible assembly is tilted.
